# EUROPEAN PATENT APPLICATION

(11) **EP 0 787 788 A1**
(43) Date of publication of application: **06.08.1997**
(21) Application number: 96301554.0
(22) Date of filing: 06.03.1996
(51) Int. Cl.: C10G 73/40, B01J 2/06

(54) **Wax granules and device for their preparation**

(30) Priority: 26.01.1996 CA 2168143
(71) Applicant: Cheng, Jackie Chak Yin, Vancouver, B.C. V6M 2K7 (CA)
(72) Inventor: Cheng, Jackie Chak Yin, Vancouver, B.C. V6M 2K7 (CA)
(74) Representative: Vaughan, Christopher Tammo

(57) **Abstract**

Wax granules (10) shaped like small stones are disclosed for use in replenishing a burner (40) to supply a wick (41) with fuel for producing a candle-like flame. The wax granules (10) have a composition of approximately 93% paraffin wax and approximately 2% soft wax, both said waxes having melting points in the range of 52-66°C, each said granule (10) having an irregular shape like a small stone with dimensions approximately in a range of 2-10mm and being formed by dripping molten wax onto moving water. Also disclosed is an apparatus (20) for the manufacture of the wax granules (10).

## Description

This invention relates to the manufacture of a wax product. More precisely, it relates to the manufacture of small decorative chunks of wax, referred to as "stones", that are useful as a fuel to be burnt with a wick in a burner.

A variety of burners in many shapes and sizes are available to burn oil with a wick to produce a small flame similar to a candle. Oil may be added to the existing supply at any time to replenish the fuel. Other similar burners receive a candle and contain the melting wax during burning to replenish the wick. Candle refills are available, but it is usually necessary to scrape out the remains of the old candle before adding a candle refill. It would be advantageous if the candle burners were as easy to refill as the oil burners.

U.S. Patent 4,002,706 discloses wax powders of improved hardness and/or free-flowing properties which are produced from blends containing a high content of soft wax and a harder or higher-melting wax component. The molten blend is sprayed and chilled in the form of droplets predominantly between 0.2 and 1mm in diameter to solidify rapidly while in suspension. The harder, higher-melting components selectively solidify in the outermost region of the particles. The wax powder so obtained is superior to powders obtained by casting the blend into blocks, followed by milling. The powders are useful for candle extrusion and chipboard manufacture, and as internal and external lubricants for plastics, e.g. polyvinylchloride. The powders formed are not suited to and are not used for the purposes of this invention.

According to a first aspect of the present invention, there is provided a plurality of wax granules having a composition of approximately 93% paraffin wax and approximately 2% soft wax, both said waxes having melting points in the range of 52-66°C, each said granule having an irregular shape like a small stone with dimensions approximately in a range of 2-10mm and being formed by dripping molten wax onto moving water.

The small wax granules have irregular dimensions and may be used as a fuel for wick burners. The stone shape of the wax granules presents a novel and aesthetically pleasing size and shape which also may be conveniently packaged for sale.

The wax product of this invention has an irregular shape like a stone with a longest dimension in a range of approximately 2-10mm and comprises paraffin and soft wax with a melting point in the range of 52-66°C. In a preferred embodiment the wax used to manufacture the granules is a scented wax to create a pot-pourri effect when it is burnt. The composition of the wax by weight is approximately 93% paraffin wax and 2% soft wax and 5% of a fragrance. The amount of the fragrance can be reduced and substituted with an equal amount of paraffin wax to make more lightly scented wax or wax having no scent at all. A small amount of dye may also be required create coloured wax stones. The stone-like size and shape of the wax makes it attractive to the consumer and permits easy handling and packaging. The wax granules are also resistant to agglomeration at room temperatures.

According to a second aspect of the present invention, there is provided a plurality of wax granules in combination with a burner containing the granules and a wick embedded in the granules to form a candle-like burner which may be replenished with additional granules as required.

According to a third aspect of the present invention, there is provided apparatus to manufacture wax granules shaped like small stones comprising a heated wax container to hold and heat a mixture of melted wax, a mixer to keep the wax moving in the container to maintain a consistent mixture, one or more spigots near the bottom of one side of the container and in communication with the wax within the container, each said spigot having a valve to control the flow rate of wax through the spigot, a water tank having a width sufficient to permit all spigots to drip into the water and of a length sufficient to permit the wax droplets to cool in the water to form wax granules, said water tank having a supply chamber and a first weir located before and beneath the spigots to supply water and to cause a current of water to flow from the first weir under the spigots and down the length of the tank, a second weir located at an end of the water tank opposite the spigots to permit excess water and wax granules to overflow, a collection tank having a filter means to separate wax granules from the water, a reservoir to contain a supply of water in communication with the collection tank, a recirculation line to recirculate water from the reservoir, and a pump to force water to circulate around the apparatus.

The apparatus of this invention has a container for heated wax with a plurality of spigots located near one bottom side of the container to permit the molten wax to drip from the container into a shallow tank of water extending a distance sufficient to cool the molten wax to solid droplets and having a width sufficient to underlie each of the spigots. The tank has a first weir and a second weir at opposite ends of the length of the tank. Water is fed over the first weir to create a flow from the first weir along the length of the water tank to and over the second weir. A collection tank is located under, after and adjacent to the second weir to receive cooled wax granules and water coming over the second weir. A water reservoir is connected to the collection tank to receive water from the collection tank and to maintain a surplus supply of water. A recirculation line extends from the water reservoir to supply water to the spigot end of the water tank and a pump is provided to pump the water through the recirculation line.

In the process of this invention, wax is heated and maintained in the wax container at a temperature between 75°C and 80°C. The flow rates of each spigot are adjusted to permit between 120 drops and 150 drops per minute. Each spigot is pre-heated to a temperature of 70°C to maintain the liquidity of the wax. Water is pumped through the recirculation line from the reservoir to the first weir and over the weir to create a flow across the water container from the first weir to the second weir and over into the collection tank. The water is maintained at a temperature of 17°C to 24°C. The heated wax is maintained in a liquid state in the container and agitated by means of a mixer. The valves on the spigots are adjusted to obtain a suitable drip rate of between 120 to 150 drops per minute into the water flowing from the first weir to the second weir. A basket may be placed in the collection tank to receive the wax stones and to allow the water to pass through the basket into the reservoir. The drops of wax fall on the water in a liquid state and cool as they pass along the surface of the water tank to become hardened and irregularly shaped by the water current. As they flow over the second weir they are collected in the collection basket. The collection basket may be removed and replaced as it is filled.

In the figures that illustrate a preferred embodiment of this invention:
Figure 1 is an illustration of a wax stone of this invention;
Figure 2 is an illustration of the manufacturing apparatus of this invention;
Figure 3 is a close-up illustrating the spigot end of the manufacturing apparatus of this invention; and
Figure 4 is an illustration of a burner using the wax stones of this invention in combination with a wick.

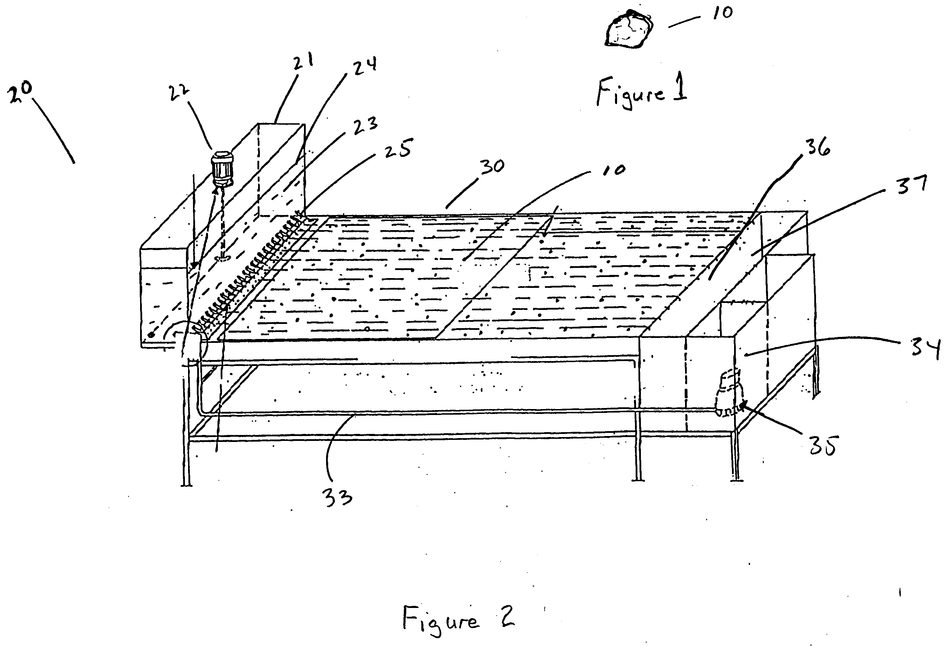

In the figures like numerals indicate like elements. Figure 1 illustrates a wax granule (10) which has an irregular shape with its longest dimension between about 2-10mm. It is manufactured to resemble a small stone or stone so that it will have a novel pleasing aesthetic appearance. The composition of the wax in the preferred embodiment is 93% paraffin wax, 2% soft wax and 5% fragrance with a melting point of 52-66°C. This mixture may be dyed with an appropriate amount of dye to achieve a coloured wax stone. It is desirable that each stone be of a different shape and size to create the appearance of a naturally occurring substance. It is also desirable that the wax granules be made of wax with sufficient hardness that the stones will not agglomerate at room temperature.

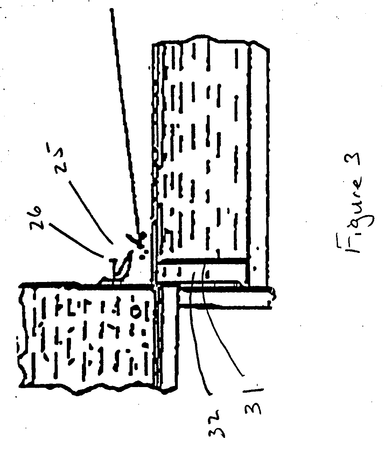

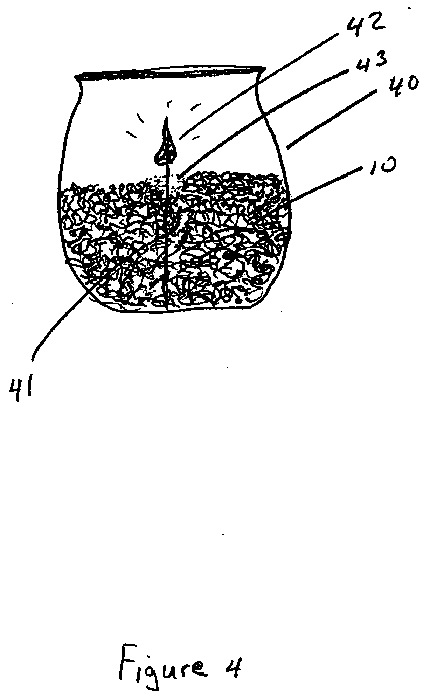

Figure 2 illustrates a preferred embodiment of the manufacturing apparatus (20). The apparatus comprises a heated wax container (21) having a mixer (22) to keep the wax moving in the container (21) and to maintain a consistent mixture. The melted wax (23) is maintained at a level (24) by batch or continuous reintroduction of new wax in order to maintain a reasonably constant pressure near the bottom of the container. At one bottom side of the container a plurality of spigots (25) are located in communication with the wax (23) within the container (21). As best illustrated in Figure 3 each spigot (25) has a valve (26) which may be adjusted to control the flow rate through the spigot (25). A water tank (30) has a width sufficient to permit all spigots (25) to drip into the water and of a length sufficient to permit the wax droplets to cool in the water to form wax granules. A weir (31) and a supply chamber (32) are located before and beneath the spigots (25). The supply reservoir is supplied by a recirculation line (33) with water from a reservoir (34) by means of a pump (35). At the opposite end of the water tank (30) is a second weir (36) over which the surface of the water and the wax granules fall into a collection tank (37) which may contain a basket or a filter (not shown) to separate the wax granules from the water. The water communicates from the collection tank into the reservoir and is pumped by pump (35) back through the recirculation line (33) to repeat the process.

Figure 4 illustrates a typical burner (40) containing the wax granules (10) and a wick (41). When the wick is ignited with a flame (42) it melts the wax granules (10) to form a pool (43) of melted wax which by capillary action is taken up by the wick and feeds the flame (42).

It will be appreciated by those skilled in the art that the embodiments of this invention described above are illustrative and are not intended to restrict the scope of the invention which is defined hereafter in the claims.

## Claims

1. A plurality of wax granules (10) having a composition of approximately 93% paraffin wax and approximately 2% soft wax, both said waxes having melting points in the range of 52-66°C, each said granule (10) having an irregular shape like a small stone with dimensions approximately in a range of 2-10mm and being formed by dripping molten wax onto moving water.

2. A plurality of wax granules (10) as claimed in claim 1, wherein a predetermined amount by weight of fragrance is added to the composition in replacement of an equal amount by weight of soft wax.

3. A plurality of wax granules (10) as claimed in claim 1, wherein a predetermined amount by weight of fragrance and dye is added to the composition in replacement of an equal amount by weight of soft wax.

4. A plurality of wax granules (10) in combination with a burner (40) containing the granules (10) and a wick (41) embedded in the granules (10) to form a candle-like burner which may be replenished with additional granules (10) as required.

5. Apparatus (20) to manufacture wax granules (10) shaped like small stones comprising a heated wax container (21) to hold and heat a mixture of melted wax (23), a mixer (22) to keep the wax moving in the container to maintain a consistent mixture, one or more spigots (25) near the bottom of one side of the container (21) and in communication with the wax (23) within the container (21), each said spigot (25) having a valve (26) to control the flow rate of wax through the spigot (25), a water tank (30) having a width sufficient to permit all spigots (25) to drip into the water and of a length sufficient to permit the wax droplets to cool in the water to form wax granules (10), said water tank (30) having a supply chamber (32) and a first weir (31) located before and beneath the spigots (25) to supply water and to cause a current of water to flow from the first weir (31) under the spigots (25) and down the length of the tank (30), a second weir (36) located at an end of the water tank (30) opposite the spigots (25) to permit excess water and wax granules (10) to overflow, a collection tank (37) having a filter means to separate wax granules (10) from the water, a reservoir to contain a supply of water in communication with the collection tank (37), a recirculation line (33) to recirculate water from the reservoir, and a pump (35) to force water to circulate around the apparatus (20).
